(19) **Europäisches Patentamt European Patent Office Office européen des brevets**

(11) **EP 4 530 264 B1**

(12) **EUROPEAN PATENT SPECIFICATION**

(45) Date of publication and mention
of the grant of the patent:
**23.07.2025 Bulletin 2025/30**

(21) Application number: **23200765.8**

(22) Date of filing: **29.09.2023**

(51) International Patent Classification (IPC):
***C03B 5/20*** *(2006.01)* ***C03B 5/26*** *(2006.01)*
***C03B 5/04*** *(2006.01)* ***C03B 5/185*** *(2006.01)*
***C03B 7/07*** *(2006.01)*

(52) Cooperative Patent Classification (CPC):
**C03B 5/20; C03B 5/04; C03B 5/185; C03B 7/07**

(54) **RISER DUCT FOR A FINING VESSEL AND METHOD FOR FINING A GLASS MELT**

STEIGROHR FÜR EIN LÄUTERGEFÄSS UND VERFAHREN ZUM LÄUTERN EINER GLASSCHMELZE

CONDUITE MONTANTE POUR UN NAVIRE DE FINITION ET PROCÉDÉ DE FINITION D'UNE MASSE FONDUE DE VERRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**02.04.2025 Bulletin 2025/14**

(73) Proprietor: **SCHOTT AG**
**55122 Mainz (DE)**

(72) Inventors:
• **Rasp, Josef**
**95666 Mitterteich (DE)**
• **Eichholz, Rainer Erwin**
**95666 Mitterteich (DE)**
• **Weidmann, Günter**
**55122 Mainz (DE)**
• **Schmidbauer, Wolfgang**
**55122 Mainz (DE)**

(74) Representative: **Fuchs Patentanwälte Partnerschaft mbB**
**Tower 185**
**Friedrich-Ebert-Anlage 35-37**
**60327 Frankfurt am Main (DE)**

(56) References cited:
WO-A1-2014/116549    JP-B2- 3 005 210
US-A- 5 120 342    US-A- 5 370 723

**Description**

The present disclosure relates to a riser duct for connecting a glass melting vessel to a fining vessel and a method for fining a glass melt. The fining efficiency is improved by using two or more electric heating circuits in the riser duct for heating the glass melt close to the required fining temperature and ascertaining a homogenous temperature profile over the width of the fining vessel.

Background

The production of glass has a high carbon footprint due to the amount of energy required for the melting and fining processes. This is particularly the case for heating by gas burners which use natural gas. A reduction of the carbon footprint is possible if, instead, an electric resistance heating is used which is provided with power from renewable energy sources like wind power, waterpower, or solar panels. The same power sources may also be used to produce hydrogen by electrolysis which then can be used to feed the gas burners. While the latter requires less changes to an existing glass production facility with a gas burner heating, the intermediate step of electrolysis is associated with a considerable energy loss. Hence, a direct use of the electrical power is more desirable.

There are various kinds of glass compositions. Some glass compositions are relatively easy to manufacture in good quality, others require sophisticated equipment and/or extremely well-balanced production processes. Generally, the glass compositions used to make drinking glasses and bottles, ordinary windowpanes, and other construction glass products, e.g., glass wool used for insulation, are relatively easy to manufacture in good quality because the glass used for these products has rather low melting temperatures and a steep viscosity-temperature curve. Additionally, quality criteria of these manufactured products are not very stringent. For example, drinking glasses and construction glass products may contain an occasional bubble, and variations in shape and dimension are tolerable. These glass products may contain impurities to a certain extent because their use does not require defined light transmission properties, or stringent purity regulations.

The types of glass compositions used for many mass products, such as soda lime glass compositions, have low melting temperatures because of significant amounts of alkali metal oxides and alkaline earth metal oxides. The respective glass melting facilities achieve very high throughput, often more than 200 tons of glass per day, or even 400 tons per day. Naturally, the amount of energy needed for making 200 tons of low melting glass is significantly lower than for a higher melting glass.

The quality required for a given product depends on its intended use. Some high-quality glasses are used to make products that do not entertain the occasional bubble and must meet stringent criteria in terms of shape, dimensional variations, and purity (both chemical and optical). Many of these glasses are rather difficult to manufacture not only because of the stringent criteria but also because of high melting temperatures. High melting temperatures may be necessary to achieve melt viscosities sufficient for homogenization and removal of bubbles from the melt. Examples of high-quality glass products include pharmaceutical containers and glass tubes used for making such containers.

It is an object of this disclosure to provide glass products that meet high-quality criteria. A further object of this disclosure is to provide a method for the production of such glass products which also allows for a high throughput without diminishing the quality of the produced glass. An important step in the production of glass products that meet high-quality criteria rests in the fining step. Refining aims at the removal of bubbles from the glass melt by suitably high temperatures, optionally accompanied by stirring of the glass melt, and is generally assisted by refining agents which undergo chemical reactions and force gaseous components, such as e.g., $H_2O$, $CO_2$, $N_2$, $SO_2$, HCl, HF, and $O_2$, out of the glass melt. Additionally, design considerations of the fining vessel play an important role to provide for an efficient refining of the glass melt.

For the fining vessels to achieve a sufficiently bubble free glass melt, the size of the vessels, in particular their length, is already quite large when compared to the melting vessels and they occupy a large space. This also means that the glass melt has to be kept at an increased temperature for longer times because the fining process requires a sufficiently low viscosity for the bubbles to escape the melt. Hence, there is a need for an improvement of the efficiency of the fining process for a reduction of the carbon footprint without diminishing the glass quality if the size of the fining vessels shall be kept at the same level.

WO 2014/116549 A1 discloses a process and apparatus for improving the quality of glass in a molten glass refining step, which process produces glass that may be used in a variety of products.

Summary of disclosure

This disclosure relates to a riser duct for connecting a glass melting vessel to a fining vessel, according to claim 1, and to a method of fining a glass melt, according to claim 11.

Further aspects of the disclosure are described in the dependent claims.

Details of disclosure

The details of this disclosure relate to the aspects described in the summary of disclosure. Any of the features of the embodiments described hereinafter may relate to the riser duct as well as the method for fining a glass melt.

A "glass melt" is a volume of a batch of glass raw materials that has a viscosity of less than $10^{7.6}$ dPas. Such a viscosity can be measured using the fiber elongation method, e.g. as described in DIN ISO 7884-6:1998-02, where the elongation speed of a fiber with a defined diameter is determined with different weights at different temperatures.

The temperature at which the glass melt has a viscosity of $10^2$ dPas is herein called "temperature T2". Similarly, the temperature at which the glass melt has a viscosity of $10^4$ dPas is herein called "temperature T4". Temperature T2 is less than 1,500 °C for glass compositions with high contents of alkali metal oxides or alkaline earth metal oxides, such as soda lime glass and other glass compositions. These viscosities can be measured using a rotational viscosimeter, e.g. as described in DIN ISO 7884-2:1998-2. The dependence of viscosity on temperature is determined according to the VFT equation (Vogel-Fulcher-Tammann). The VFT equation is shown below.

$$\lg(\eta/dPas) = A + \frac{B}{(t - t_0)}$$

In the VFT equation, t is the temperature under consideration. A, B and $t_0$ are the so-called VFT constants that are specific for each glass composition.

"Dwell time" is the time that a given portion of the glass melt spends in a part of the apparatus, e.g., the riser duct before being withdrawn from the riser duct. Dwell time can be measured using so-called tracers, i.e., components that are added to the glass melt so that they can be detected in the product, allowing conclusions as to the time spent in the riser duct. Examples of tracer compounds are Ca, Sr and Y. The "average dwell time" is defined as:

$$\frac{riser\ duct\ volume\ [m^3]}{riser\ duct\ throughput\ [\frac{m^3}{h}]}$$

Whereas the average dwell time describes the time average which the glass melt takes to pass through a part of an apparatus, the "shortest dwell time" describes the shortest time that an individualized portion of the glass melt passes through a certain part of the apparatus. The "shortest dwell time" can also be measured using so-called tracers, for example by adding tracers to the batch of raw materials when fed into the melting vessel and by measuring the time it takes to detect said tracers at the upstream and downstream end of the riser duct.

Unless explicitly noted differently, a "horizontal cross-section" of a body, as used herein, refers in case of a body with differently sized horizontal cross-sections to the cross-section of the body having the maximal width.

Moreover, the horizontal cross-section is referring to the inner dimensions of a body, such as the riser duct, without the walls, i.e., the free space which can be filled with the glass melt.

In the case of the riser duct, the width of a cross-section refers to the side of the cross-section which is oriented perpendicular to the flow duct and parallel to the upstream front end of the fining vessel which is to be connected with the riser duct.

Following the path of a glass melt in the riser duct, the "upstream" side of the riser duct or sections therein is referring to the lower side of it and the "downstream" side to the upper side of it, respectively.

An "average temperature" of the glass melt in the riser duct refers to the arithmetic mean of the temperature readings of temperature probes arranged in a distance of 5 cm from the wall or floor, wherein at least one temperature probe is installed in each case in the lower electrode section of the riser duct at the center of the floor where the flow duct enters, in the left and right walls at half of the height of the lower electrode section, and in the upper electrode section of the riser duct in the left and right walls at half of the height of the upper electrode section and in the middle of the front wall opposite the outlet. Hence, at least six temperature readings will be used for calculating the mean value. Optionally, there may be installed further probes along the height of the riser duct for increasing accuracy of the mean value.

Likewise, the "average temperature" of the glass melt in the fining vessel refers to the arithmetic mean of the temperature readings of temperature probes arranged in a distance of 5 cm from the wall or floor, wherein the glass melt in the fining vessel has a top layer and a bottom layer, each having a thickness extension of 1 cm, and the temperature of the glass melt in the top layer is measured using at least three top temperature probes and the temperature of the glass melt in the bottom layer is measured using at least three bottom temperature probes located at the same horizontal positions, viewed in a top view of the fining vessel. Hence, again at least six temperature readings will be used for calculating the mean value.

The "average temperature" of the glass melt on entry into the riser duct can be determined as the temperature of the melt on exit of the flow duct. It refers to the arithmetic mean of the temperature readings of temperature probes arranged in a distance of 5 cm from the wall or floor, wherein in the terminal 25 % of the length at the downstream side of the flow duct at least two temperature probes are installed in each case on the floor and in the left and right walls at half of the height of the flow duct. Hence, also in this case at least six temperature readings will be used for calculating the mean value. Optionally, there may be installed further probes within said section of the flow duct for increasing accuracy of the mean value, e.g., also at the ceiling.

The riser duct for connecting a glass melting vessel to a fining vessel may optionally form a part of the fining vessel and/or partially overlap with the fining vessel.

The riser duct comprises a lower electrode section and an upper electrode section, a flow duct connected to the lower electrode section for feeding the glass melt from the glass melting vessel into the riser duct, and an outlet arranged in the upper electrode section for feeding the glass melt from the riser duct into the fining vessel.

The flow duct is not required to have a certain minimum length. Its only purpose is the connection of the riser duct with the glass melting vessel. Hence, depending on the relative distance of this glass melting vessel to the riser duct, the length of the flow duct may in some embodiments be relatively short. In optional embodiments, the flow duct may even consist of an inlet between the glass melting vessel and the riser duct. A short flow duct may help to reduce the heat loss of the glass melt between the melting and fining section of a glass melting facility.

The lower electrode section is coextensive in height with the electrodes of the lowest heating circuit. Correspondingly, the upper electrode section is coextensive in height with the electrodes of the highest heating circuit. If the electrodes of a single heating circuit of such sections are not arranged at the same height or have a differing length, the "height of the electrodes" is meant to extend from the lowest end of the lowest electrode to the topmost end of the highest electrode. The same applies to two or more heating circuits which are not arranged at the same height but overlapping.

Optionally, the riser duct further comprises one or more non-electrode sections. These non-electrode sections may have the same or a different width of their horizontal cross-sections as a neighboring electrode section. They are characterized by the absence of electrodes within the respective height section of the riser duct.

The outlet in the upper electrode section of the riser duct may be constructed as a separate part, such as an aperture or duct, or simply consist of the top end of the wall on the downstream side of the riser duct where the glass melt will optionally flow from the riser duct into a middle section of the fining vessel.

The walls of the riser duct, the flow duct, and/or the outlet may be made of a variety of heat resistant materials. In an embodiment, the bottom plate and/or walls comprise or consist of refractory material. The refractory material may be a ceramic material, a metal material, or a combination thereof. A suitable metal may be platinum. Platinum is very expensive and may contaminate the melt if it dissolves due to aggressive melt components. In embodiments, the refractory material does not comprise or consist of platinum and/or other metals. In embodiments, the refractory material may be an oxidic ceramic, i.e. a material comprising or consisting of one or more oxides, such as metal oxides. Optionally, the refractory material may be temperature resistant up to at least 1,400 °C, at least 1,600 °C, or even at least 1,700 °C. "Temperature resistant" means in this context that the refractory material has a melting point or melting range above the indicated temperature. In embodiments, the refractory material may be selected from $ZrO_2$, $Al_2O_3$, $SiO_2$, $Cr_2O_3$, MgO, and combinations thereof.

By providing the lower electrode section and the upper electrode section each with one or more heating circuits each comprising at least one pair of electrodes, the riser duct is able to achieve several advantages, some of them more pronounced in combination with certain geometries of the lower electrode section and the upper electrode section. The electric heating at the bottom level and the top level of the riser duct may not only prevent the heat loss of the glass melt on its way from the melting vessel into the fining vessel, as encountered in prior art, but may also be used to heat the glass melt already close to the fining temperature. Hence, the fining process may use the whole length of the fining vessel for the fining process instead of first having to rise the temperature of the melt in a certain distance upon entry of the fining vessel to the required level. This will considerably improve the fining efficiency. Ideally, the fining reaction should already begin at the end of the riser duct by a growing of the small bubbles contained in the melt. Hence, the temperature on exit of the riser duct may be chosen dependent on the volume flow through the outlet such that the bubble growth of the fining reaction starts already before the outlet into the fining vessel where the then active fining agents will further support bubble growth and escape from the melt. In other words, the faster the glass melt exits the riser duct, the higher the temperature may be chosen because there is a certain delay between reaching the required fining temperature and the growth of bubbles in the melt.

Moreover, the dwell time in the riser duct can be controlled and/or equalized by specifically influencing the flow behavior of the glass melt to avoid turbulences and dead zones.

In embodiments, the electrode pairs in the heating circuits may be formed with tuples of 2, 3, or 4 electrodes instead of single electrodes in the pairs. For example, a heating circuit may be formed with a pair of electrode triples. This may further help to reduce the current density on the single electrodes in the pairs while achieving the same heating efficiency and flow properties.

In embodiments, a horizontal cross-section of the lower electrode section may have a smaller width than a horizontal cross-section of the upper electrode section.

Particularly in combination with essentially T-shaped or widening geometries of the riser duct, the heating process may be further enhanced by using longer and/or larger electrodes in the wider upper electrode section for heating the glass melt close to the fining temperature. These will then require less current density to achieve the necessary power input and consequently have less electro-corrosion. It has also been found that this improves the volume-surface-ratio of the glass melt in the riser duct such that the heat loss is minimized.

In embodiments, the outlet may have a width of 80 % - 110 % of an initial width of the fining vessel. This initial width may in particular refer to the initial width of the actual fining tank section of the fining vessel whose horizontal cross-section may have a rectangular or trapezoid shape in the flow direction. The width may be 80 % - 110 % of the initial width of the fining vessel or 80 % - 105 % or 80 % - 100 % or 85 % - 100 % or 90 % - 100 % or 95 % - 100 %. Optionally, the width of the outlet is the same or essentially the same as the initial width of the fining vessel. Such a width of the riser duct outlet adapted to the width of the fining vessel is advantageous because the whole width of the fining vessel from start to finish can be used for fining without creating dead zones and the homogenized temperature level and flow properties can be carried on into the fining vessel. In particular, a plug flow profile can be created and a central short-circuit flow can be avoided.

In embodiments, the outlet may have a width of from 0.16 m to 6.05 m, or 0.16 m to 5.5 m, or 0.24 m to 4.95 m, or 0.32 m to 4.4 m, or 0.4 m to 3.85 m, or 0.48 m to 3.3 m, or 0.56 m to 2.75 m, or 0.64 m to 2.2 m, or 0.72 m to 1.65 m, or 0.8 m to 1.1 m. Optionally, the width of the outlet may be 0.16 m or more, or 0.24 m or more, or 0.32 m or more, or 0.4 m or more, or 0.48 m or more, or 0.56 m or more, or 0.64 m or more, or 0.72 m or more, or 0.8 m or more. Optionally, the width of the outlet may be 6.05 m or less, or 5.5 m or less, or 4.95 m or less, or 4.4 m or less, or 3.85 m or less, or 3.3 m or less, or 2.75 m or less, or 2.2 m or less, or 1.65 m or less, or 1.1 m or less.

In embodiments, there may be arranged one or more middle electrode sections between the lower electrode section and the upper electrode section, wherein each of the one or more middle electrode sections comprises one or more heating circuits each comprising at least one pair of electrodes and wherein a horizontal cross-section of each middle electrode section has a width which is larger than or equal to that of the section directly upstream of said section and a width smaller than or equal to that of the section directly downstream of said section.

This effectively means that in addition to the two heating circuits provided in the lower electrode section and the upper electrode section further heating circuits along the height of the riser duct may be installed. These may be advantageous for facilitating the fine-tuning of the heat input and the flow properties of the glass melt in the riser duct.

The middle electrode sections are coextensive in height with the height of the electrodes of each middle heating circuits. Regarding the extension of the "height of the electrodes", the same definitions as given above for the upper electrode section and the lower electrode section apply.

In embodiments, the width of the horizontal cross-sections of the lower electrode section, middle electrode sections, and/or upper electrode section may change continuously or discontinuously along a height of the riser duct or is essentially constant. The vertical cross-section of the riser duct resulting from this design of the middle electrode sections in combination with the upper and lower electrode section may, hence, be a rectangle, a T-shape, a stepwise widening form wherein the steps may have a different height, a continuously widening form (such as a trapezoid or triangle) or a curved form.

In embodiments, above the upper electrode section a gaseous phase may be provided above a surface of the glass melt in which optionally further heaters are installed and which optionally is in fluid communication with a gaseous phase of the fining vessel. Such an open space above the glass melt surface will allow for bubbles which have been carried over from the melting vessel or formed within the riser duct to escape the melt. Moreover, in this open space there may be installed further heaters for additional heating of the melt from above. These further heaters may, for example, be selected from microwave heaters, infrared heaters, or burners. The burners may be fuel burners or gas burners. The gas may be natural gas. In embodiments, the gas used for the burners comprises or consists of non-fossil gas, such as biofuel (e.g. bio-gas) and/or hydrogen, particularly hydrogen obtained from renewable sources. Optionally, the amount of thermal energy obtained from burning fossil fuels is less than 10.0 %, less than 5.0 %, or less than 1.0 % relative to the total amount of thermal energy introduced into the melt. In one embodiment, no fossil fuel is used for the burners.

In one embodiment, the burners can be heated with a mixture of hydrogen and oxygen or with natural gas and oxygen or with a blend of natural gas and hydrogen with oxygen, or ammonia and oxygen, or biomethane or biofuel. In one embodiment, the burners can be heated with a mixture of hydrogen and air, or with natural gas and air, or with a blend of natural gas and hydrogen with air.

In one embodiment, the additional heaters do not comprise burners.

In one embodiment, heating the glass melt by means of a burner relies exclusively, i.e., to more than 99 % (v/v) relative to the total volume of hydrogen and oxygen, on hydrogen and oxygen generated through the electrolysis of $H_2O$. Electrolysis powered through renewable energy inherently provides for a reduction of the environmental burden and a reduction of the carbon dioxide footprint associated with methods of making a glass melt. Alternatively, electrolysis can be powered through nuclear energy which provides for a $CO_2$-neutral production of hydrogen. However, because of the radioactive waste this energy source is not sustainable.

In one embodiment, the carbon dioxide footprint of the glass melt is less than 500 g $CO_2$ per kg of glass. In another embodiment, the carbon dioxide footprint of the refined glass melt is less than 400 g, less than 300 g, less than 200 g, less than 100 g or even 0 g of $CO_2$ per kg of glass. For example, a glass melt having a carbon dioxide footprint of zero can be made using energy from renewable sources only, e.g., biofuel, hydrogen, or electricity from renewable sources. The carbon dioxide footprint refers to the $CO_2$ emissions resulting from scope 1 emissions according to the GHG protocol. In this context, this refers to the amount of $CO_2$ emission caused by burning fossil fuels and released by carbon containing raw materials during manufacturing of the glass melt per kg of glass material.

In embodiments, the heating circuits and any additional heaters provided in the gaseous phase above the upper electrode section may be configured such that a power density $P_{total, upper}$ providable to the glass melt comprising the sum of an electrical power density $P_{el, upper}$ providable by the heating circuits of the upper electrode section and a power density $P_{add}$ providable by the additional heaters is higher than an electrical power density $P_{el, lower}$ of the lower electrode section. The relationship may be expressed as $P_{total, upper} = (P_{el, upper} + P_{add}) > P_{el,lower}$. The inventors have found that it may be better to put more heating energy into the upper electrode section and the additional heaters above the melt than into the lower electrode section for rising the temperature close to the fining temperature. In doing so, there is created a temperature layering which in turn creates a density layering within the melt in the riser duct. Ideally, the temperature of the melt is constantly rising along the height of the riser duct. The resulting flow properties and dwell time spread may be improved this way.

In embodiments, a width $w_f$ of the horizontal cross-section of the flow duct and a width $w_l$ of the horizontal cross-section of the lower electrode section are dimensioned $w_f \leq w_l$. Here, the width $w_f$ is referring to the side of the horizontal cross-section of the flow duct which is oriented perpendicular to the direction of flow of the glass melt within the flow duct. Width $w_l$ is referring to the side of the of horizontal cross-section of the lower electrode section which is oriented parallel to width $w_f$. The flow duct may be smaller than or at most equally sized with the lower electrode section of the riser duct. As a result, the glass melt will flow faster in the flow duct than in the riser duct and lose less temperature.

In embodiments, the electrodes may be rod-shaped and/or tube-shaped and/or plate-shaped and/or block-shaped and/or dome-shaped, and/or arranged in vertical or horizontal or oblique orientation in or on a wall or a horizontal surface of an electrode section, and/or the electrode material may be selected from Pt, Rh, Ir, Pd, alloys of these noble metals, Ta, Mo, $MoSi_2$, $MoZrO_2$, W, $SnO_2$, and combinations thereof. There are several advantageous configurations of the electrodes. For example, when the riser duct has an essentially T-shaped vertical cross-section, the electrodes may be rod-shaped and arranged in vertical or slightly tilted orientation on the floor and the lower horizontal surfaces of the upper T-section. In another example, the electrodes may be rod-shaped and arranged in vertical or slightly tilted orientation on the floor and in horizontal orientation on the walls of the upper electrode section. This option is suitable for the essentially T-shaped vertical cross-sections as well as for the continuously or discontinuously widening vertical cross-sections including one or more middle electrode sections. In yet another example, the electrodes may be plate-shaped and arranged on the walls of the lower and upper electrode section. In yet another example, the electrodes may be in the lower electrode section rod-shaped and arranged in vertical or slightly tilted orientation on the floor and in the upper electrode section plate-shaped and arranged on the walls. In yet another example, the electrodes may be rod-shaped and arranged in horizontal orientation on the walls of the lower and upper electrode section. In the latter example, likewise horizontally oriented electrodes may be arranged on the walls of one or more middle electrode sections. As a final example, when the riser duct has a stepwise widening vertical cross-section including one or more middle electrode sections, the electrodes may be rod-shaped and arranged in vertical or slightly tilted orientation on the floor and the horizontal surfaces of the middle and upper electrode sections.

In embodiments, the flow duct may be inclined towards the riser duct and/or the outlet is inclined towards the fining vessel. An inclined orientation of the flow duct towards the riser duct may be beneficial for reducing the amount of bubbles trapped for extended amount of time in the flow duct. An inclined orientation of the outlet towards the fining vessel may reduce the wear of the refractory material of the outlet and improve the heating by radiation from burners installed in the walls above the glass melt surface.

The method for fining a glass melt comprises feeding a glass melt from a melting vessel to a flow duct of a riser duct, and feeding the glass melt from an outlet into a fining vessel, wherein the glass melt is heated in the riser duct such that an average temperature of the glass melt on exit of the riser duct is < 50 °C or < 30 °C or < 10 °C below an average temperature of the glass melt in the fining vessel. As mentioned above, the average temperature of the glass melt on exit of the riser duct should be chosen such that the bubble growth of the fining action starts already within the riser duct. Optionally, the temperature increasing rate may be set low and continuous in order to avoid a sharp stepwise temperature increase which can cause an unwanted creation of new bubbles.

In embodiments, the glass melt may be heated in the riser duct such that a viscosity of the glass melt on exit of the riser duct is $< 10^2$ dPas or $< 10^{2.5}$ dPas or $< 10^3$ dPas.

The viscosity behavior of the glass composition used in the method may be of relevance. As mentioned above, the temperature dependence of glass melt viscosity may be described using the VFT equation. Optionally, the glass melt has a VFT constant B in the range of from 5,000 K to 9,000 K and/or $t_0$ in the range of from 75 °C to 240 °C. Optionally, VFT constant A is from -5.0 to 0.0. In an embodiment, A is -1,0 or less, such as -4.0 to -1.0. In embodiments, VFT constant B is from 5,000 K to 9,000 K, such as from 4,500 K to 8,500 K. Optionally, $t_0$ may be at least 75 °C and up to 240 °C; $t_0$ may be at least 200 °C.

The glass composition may be borosilicate, alumino-borosilicate or aluminosilicate glass. The glass composition may contain alkali metal oxides in amounts of less than 20 % by weight, less than 15 % by weight, less than 12 % by weight, less than 10 % by weight or less than 5 % by weight. Optionally, the glass composition may be free of alkali metal oxides. In alternative embodiments, the amount of alkali metal oxides in the glass composition may be at least 1% by weight.

The glass composition may contain alkaline earth metal oxides in amounts of less than 20 % by weight, less than 15 % by weight, less than 12 % by weight, less than 10 % by weight, or less than 5 % by weight. Optionally, the glass composition may be free of alkaline earth metal oxides. In alternative embodiments, the amount of alkaline earth metal oxides in the glass composition may be at least 1 % by weight.

The glass composition may contain $SiO_2$ in an amount of at least 48 % by weight, at least 55 % by weight, at least 65 % by weight, at least 70 % by weight or at least 75 % by weight. Optionally, the amount of $SiO_2$ may range up to 85 % by weight, up to 82.5 % by weight or up to 80 % by weight.

Optionally, the glass composition may be that of a glass ceramic, i.e. a glass composition that can be further processed into a glass ceramic by appropriate heat treatment. In case that the glass composition is that of a glass ceramic, the composition may contain nucleating agents such as $TiO_2$ and/or $ZrO_2$. Optionally, the total amount of $TiO_2$ and/or $ZrO_2$ may be at least 2.0 % by weight, such as at least 2.5 % by weight. The glass composition may for example be a lithium aluminosilicate glass composition, e.g., containing at least 2.0 % by weight of $Li_2O$.

The glass composition may include one or more fining agents. The fining agent may be selected from multivalent metal oxides, halides, sulfates and combinations thereof. In an embodiment, the fining agent is selected from tin oxide, cerium oxide, chloride, fluoride, sulfate, antimony oxide, arsenic oxide, iron oxide and combinations thereof.

Optional glass compositions include $Al_2O_3$ in an amount of at least 1.5% by weight or at least 5.0% by weight or even at least 10.0% by weight. The amount of $Al_2O_3$ may be up to 23.0% by weight, up to 20.0% by weight or up to 18.0% by weight. In certain embodiments, the amount of $Al_2O_3$ may range from 1.5% to 23.0% by weight, from 5.0% to 20.0% by weight or from 10.0% to 18.0% by weight.

Additionally or alternatively, the glass composition may include $B_2O_3$ in an amount of at least 0.0% by weight or at least 8.0% by weight or even at least 10.0% by weight. The amount of $B_2O_3$ may be up to 20.0% by weight, up to 16.0% by weight or up to 14.0% by weight. In certain embodiments, the amount of $B_2O_3$ may range from 0.0% to 20.0% by weight, from 8.0% to 16.0% by weight or from 10.0% to 14.0% by weight.

Many highly viscous glass compositions contain significant amounts of $SiO_2$, $Al_2O_3$ and $B_2O_3$. Optionally, the glass compositions used in this invention have a total content of $SiO_2$, $Al_2O_3$ and $B_2O_3$ of at least 75.0% by weight, at least 78.0% by weight or even at least 85.0% by weight. The total amount of $SiO_2$, $Al_2O_3$ and $B_2O_3$ may be limited to not more than 97.0% by weight, up to 93.5% by weight or up to 90.0% by weight. Optionally, the amount of $SiO_2$, $Al_2O_3$ and $B_2O_3$ may range from 75.0% to 95.0% by weight, from 78.0% to 92.5% by weight or from 85.0% to 90.0% by weight.

In embodiments, the glass melt may be heated in the riser duct in a lower electrode section and an upper electrode section by means of heating circuits and optionally by additional heaters provided in a gaseous phase above the upper electrode section such that a power density $P_{total, upper}$ provided by the heating circuits and any additional heaters comprising the sum of an electrical power density $P_{el, upper}$ provided by the heating circuits of the upper electrode section and a power density $P_{add}$ provided by the additional heaters is higher than an electrical power density $P_{el, lower}$ of the lower electrode section. The main part of the energy required to heat the glass melt close to the fining temperature is supplied to the upper part of the riser duct. Since any additional heaters, be it microwave heaters, infrared heaters, or burners, installed above the surface of the glass melt will only be able to heat to a quite limited depth of the melt, their provided power is considered in combination with the upper electrode section only.

The electrical power density provided in sum by the heating circuits of the upper electrode section may for example be 30 kW/m$^3$ or 34 kW/m$^3$ or 38 kW/m$^3$ or 42 kW/m$^3$ or 48 kW/m$^3$ or 50 kW/m$^3$, in particular in a range of from 30 kW/m$^3$ to 50 kW/m$^3$ or from 34 kW/m$^3$ to 48 kW/m$^3$ or from 38 kW/m$^3$ to 42 kW/m$^3$. The sum of the electrical power density provided by the heating circuits of the lower electrode section may for example be 70 kW/m$^3$ or 70 kW/m$^3$ or 80 kW/m$^3$ or 90 kW/m$^3$ or 100 kW/m$^3$ or 110 kW/m$^3$ or 120 kW/m$^3$, in particular in a range of from 70 kW/m$^3$ to 120 kW/m$^3$ or from 80 kW/m$^3$ to 110 kW/m$^3$ or from 90 kW/m$^3$ to 100 kW/m$^3$. A ratio between the electrical power density provided by the heating circuits of the upper electrode section to the electrical power density provided by the heating circuits of the lower electrode section may for example be 1 : 1.9 or 1 : 2.0 or 1 : 2.1 or 1 : 2.2 or 1 : 2.3 or 1 : 2.4 or 1 : 2.5.

In embodiments, the power density providable or provided by all additional heaters to the riser duct may for example be 50 kW/m$^3$ or 55 kW/m$^3$ or 60 kW/m$^3$ or 65 kW/m$^3$ or 70 kW/m$^3$ or 75 kW/m$^3$ or 80 kW/m$^3$, in particular in a range of from 50 kW/m$^3$ to 80 kW/m$^3$ or from 55

kW/m$^3$ to 75 kW/m$^3$ or from 60 kW/m$^3$ to 70 kW/m$^3$. In optional embodiments, the power density providable or provided by all additional heaters to the riser duct may for example be less than 50 kW/m$^3$ or less than 40 kW/m$^3$ or less than 30 kW/m$^3$ or less than 20 kW/m$^3$ or less than 10 kW/m$^3$ or less than 5 kW/m$^3$ or less than 1 kW/m$^3$. In further optional embodiments, there are no additional heaters provided.

In embodiments, the total power density $P_{total, upper}$ providable or provided by the heating circuits of the upper electrode section and by all additional heaters to the riser duct may for example be 50 kW/m$^3$ or 60 kW/m$^3$ or 70 kW/m$^3$ or 80 kW/m$^3$ or 90 kW/m$^3$ or 100 kW/m$^3$ or 110 kW/m$^3$ or 120 kW/m$^3$ or 130 kW/m$^3$, in particular in a range of from 50 kW/m$^3$ to 130 kW/m$^3$ or from 60 kW/m$^3$ to 120 kW/m$^3$ or from 70 kW/m$^3$ to 110 kW/m$^3$ or from 80 kW/m$^3$ to 100 kW/m$^3$.

In embodiments, the total electrical power density provided by all heating circuits to the riser duct may for example be 30 kW/m$^3$ or 40 kW/m$^3$ or 50 kW/m$^3$ or 60 kW/m$^3$ or 70 kW/m$^3$ or 80 kW/m$^3$, in particular in a range of from 30 kW/m$^3$ to 80 kW/m$^3$ or from 40 kW/m$^3$ to 70 kW/m$^3$ or from 50 kW/m$^3$ to 60 kW/m$^3$.

In embodiments, a ratio of the total power input [kW] of all heating circuits of the riser duct to the mass throughput per day [t/d] may for example be 120 kW/(t/d) or 140 kW/(t/d) or 160 kW/(t/d) or 180 kW/(t/d) or 200 kW/(t/d) or 220 kW/(t/d), in particular in a range of from 120 kW/(t/d) to 220 kW/(t/d) or 140 kW/(t/d) to 200 kW/(t/d) or 160 kW/(t/d) to 180 kW/(t/d).

In embodiments, a mean volumetric pass-through time through the riser duct may be > 3 h or > 5 h or > 7 h or > 8 h. The mean volumetric pass-through time may be < 50 h or < 40 h or < 30 h. The mean volumetric pass-through time through the riser duct should not be too short as this is an indicator for the time available for heating the glass melt close to the required temperature for fining. If the available time is very short, the power input into the melt by the electrodes has to be higher which will then cause a higher wear of the electrodes by electro-corrosion. And another risk would be that there is a creation of new bubbles which should be avoided.

In embodiments, an average temperature of the glass melt on entry into the riser duct may be < 50 °C or < 100 °C or < 150 °C below the average temperature of the glass melt in the fining vessel.

In embodiments, on entry into the riser duct, the glass melt may have a viscosity of < 10$^2$ dPas or < 10$^{2.5}$ dPas or < 10$^3$ dPas or < 10$^4$ dPas.

In embodiments, a shortest dwell time of the glass melt in the riser duct may be > 2.0 h or > 3.0 h or > 4.0 h. The shortest dwell time may be < 40 h or < 30 h or < 20 h. The shortest dwell time should not be too short because it may be an indicator for a non-uniform flow comprising a fast core flow and larger dead zones.

In embodiments, the heating in the riser duct may be effected such that at least in the upper 50 % of its height or at least in the upper 75 % of its height or at least in the upper 90 % of its height essentially a plug flow of the glass melt is created. The term "plug flow" is used here in the sense of fluid mechanics as a flow in a pipe having a velocity profile which is constant across any cross-section of the pipe perpendicular to the axis of the pipe and having no back mixing. The term "essential" denotes that this theoretical velocity profile is approximated by a real laminar pipe flow with a parabolic velocity profile. A plug flow or laminar flow is beneficial for the throughput of the riser duct as well as for a uniform heating of the flowing melt. Turbulent flow in the glass melt may result in the creation of more dead zones or vortices trapping portions of the melt for prolonged periods.

In embodiments, the riser duct used in the method is a riser duct as described above.

The disclosed riser duct may be particularly advantageous when used in a fining apparatus upstream of a fining vessel having a vertical duct on its downstream end for purging a refined glass melt. Typical configurations of such a fining apparatus may fine an amount of glass melt in a range of from 40 t/d to 55 t/d. Such a fining apparatus is perfectly suitable for melting special purpose glasses requiring high quality standards and an extremely low level of bubbles. In such a combination, the outlet of the riser duct may seamlessly continue into the fining section of the fining vessel. Fining apparatus of prior art will not be able to perform the fining action as described hereafter with the same efficiency due to the strong circular flow patterns in the fining tanks.

The glass melt entering from the glass melting vessel into the riser duct can be heated within the riser duct to an average temperature of the glass melt on exit of the riser duct which is < 50 °C or < 30 °C or < 10 °C below an average temperature of the glass melt in the fining vessel. For example, depending on the type of glass, the temperature of the glass melt in the outlet may be at least T2 - 150 °C or at least T2 - 50 °C or even T2. It may also be contemplated to set the temperature such that the growth of bubbles starts already in a layer close to the surface of the glass melt in the riser duct. Redox reaction based fining agents, such as As$_2$O$_3$, or evaporation based fining agents, such as chlorine, will increase the respective partial pressure within the glass melt and cause an increase of the bubble size. Bubbles with a size of more than 500 $\mu$m will then leave the glass melt through the surface already within the outlet.

Medium sized bubbles of a size in a range from 50 $\mu$m to 500 $\mu$m will require the geometry and temperature of the fining vessel which is preferably a so-called flat-bed refining vessel whose middle part where fining takes place has a maximal working height of the glass melt of at most 0.6 m. Important parameters for the efficient rise of these bubbles and exit through the surface of the glass melt are a sufficient dwell time and a sufficient temperature as well as the free **surface area** of the glass melt.

To facilitate removal of the bubbles from the glass melt, the fining vessel may additionally be provided with a wall element arranged on the bottom of its middle part which forces the smaller bubbles to rise closer to the surface. Most advantageously, such a wall element is placed near the end of the fining vessel as this allows the bubbles the longest time to grow before they are forced to the surface. The fining vessel may also have an optional ramp which is intended to let the glass melt flow downwards to the vertical duct after fining of said glass melt.

In the vertical duct through which the glass melt exits the fining vessel, the melt is cooled which causes a decrease in the partial pressure in the melt. The temperature may, for example, be reduced here to T2 - 50 °C. Further, an increase in the total pressure of the melt will occur due to the rising glass level. The bubbles having a size of smaller than 50 μm which have not yet emanated from the glass melt will then be dissolved within the vertical duct. Hence, the glass melt will exit the fining apparatus free from bubbles.

As to the free surface area within the fining apparatus, it has been found that in the riser duct, a free surface area may be desirable only at the end of the heating process whereas in the middle section of the fining vessel a very large free surface area is required. Within the vertical duct, a free surface area will have no more effect. Hence, the following distribution of the total free surface area within the fining apparatus has been found to provide most favorable results.

- riser duct < 20 % optionally < 10 %

- middle section of the fining vessel > 60 % optionally > 70 % or > 80 %

- vertical duct < 20 % optionally < 10 %

Regarding the dwell times of the glass melt within the sections of the fining apparatus, the following times have been found to be advantageous.

- riser duct > 2.0 h optionally > 3.0 h or > 4.0 h

- middle section of the fining vessel > 2.5 h optionally > 3.0 h or > 3.5 h

- vertical duct > 2.0 h optionally > 3.0 h

The dwell times or the shortest dwell times, respectively, are a very important factor to watch because the volume fraction of the glass melt leaving the fining apparatus at first will be decisive for the quality of the produced glass. The growth of the bubbles is essential for the effective rise in the melt because larger bubbles will rise faster. This growth is limited by the kinetics and, hence, requires sufficient time. Consequently, the longer the shortest dwell time, the more efficient the fining action will be.

## Description of the Figures

**Figure 1** shows a perspective view of a riser duct with a lower electrode section and an upper electrode section.

**Figure 2** shows a perspective view of a riser duct as in Figure 1 having an additional middle electrode section.

**Figure 3** shows a perspective view of a riser duct having a continuously increasing width with a lower electrode section and an upper electrode section.

**Figure 4** shows a perspective view of a riser duct having a constant width with a lower electrode section, an upper electrode section, and two middle electrode sections.

## Examples

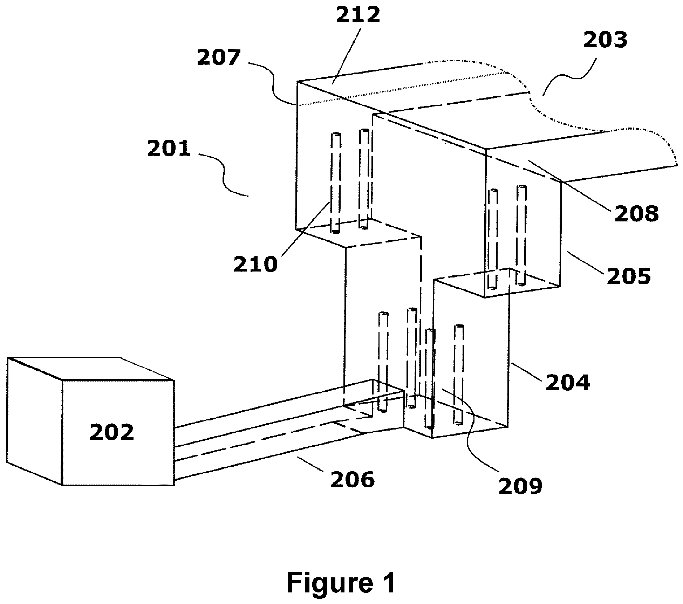

**Figure** 1 shows an embodiment of a riser duct (201) for connecting a glass melting vessel (202) with a fining vessel (203) both of which are only indicated in the figure. The riser duct (201) has a lower electrode section (204) and an upper electrode section (205) which differ in the width of their horizontal cross-sections in this example such that the shape of the riser duct (201) is essentially a T-shape. A flow duct (206) connects the lower electrode section (204) with the glass melting vessel (202) for feeding the glass melt (207) into the riser duct (201). Its width is smaller than the width of the lower electrode section (204) and it is arranged centrally at the bottom level of the lower electrode section (204).

The outlet (208) of the upper electrode section (205) for feeding the glass melt (207) from the riser duct (201) into the fining vessel (203) is in this example designed as an aperture in the downstream wall of the riser duct (201) which extends over the whole width of the upper electrode section (205). That is, the outlet (208) has a width of 100 % of the initial width of the fining vessel (203). The upper end of the wall is at level with the floor level of the fining vessel (203). Hence, the rising glass melt (207) seamlessly continues to flow into the fining vessel (203) and particularly its middle section where the fining action of bubble growth from the fining agents and escape of the bubbles from the glass melt (207) occurs.

In each of the lower electrode section (204) and the upper electrode section (205) of this example is installed a heating circuit (209) each comprising two pairs of electrodes (210). The electrodes (210) are rod-shaped and extend vertically from the bottom of the lower electrode section (204) of the riser duct (201) and the horizontal wall section of the upper electrode section (205). The two electrodes (210) on the left side of the riser duct (201) form together with the two electrodes (210) on the right side of the riser duct (201) the respective heating circuits (209) of the lower electrode section (204) and the upper electrode section (205).

Above the surface of the glass melt (207) in the upper electrode section (205) there is provided a gaseous phase (212), i.e., a free space under the superstructure of the riser duct. The bubbles within the glass melt (207) which may have been carried over from the melting vessel (202) via the flow duct (206) may escape into this gaseous phase (212). There may also be installed additional burners (not shown in the figure) in this space above the melt surface for providing extra heating of the top layer of the melt. As is indicated in the figure, the gaseous phase (212) above the surface of the glass melt (207) is in this example in fluid communication with the gaseous phase (212) of the fining vessel (203) and the surface of the glass melt (207) extends into the fining vessel (203).

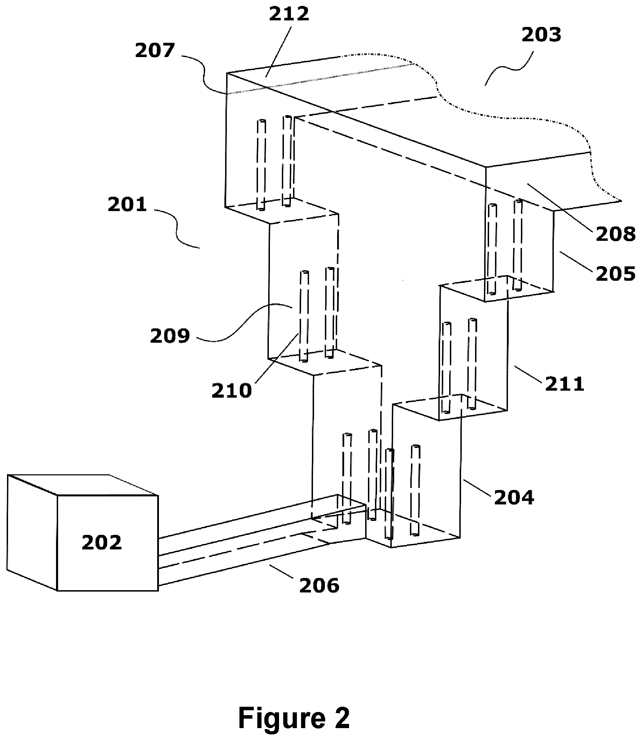

**Figure 2** shows an example of a riser duct (201) having an additional middle electrode section (211). To this end, the example of Figure 1 is modified with a further step in the T-shape, resulting in a stepwise widening of the riser duct (201) over its height. In this example of Figure 2, also there is installed a heating circuit (209) comprising two pairs of electrodes (210) in this middle electrode section (211).

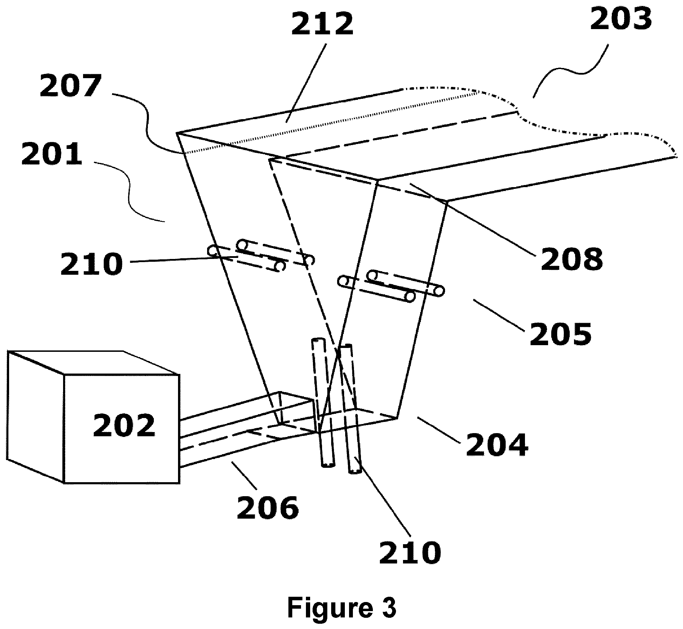

**Figure 3** shows another example of a riser duct (201) having a lower electrode section (204) and an upper electrode section (205). This example differs from the example of Figure 1 in that the electrodes (210) of the upper electrode section (205) are aligned horizontally instead of vertically and in that the shape has a continuously increasing width from bottom to top. Moreover, the heating circuit in the lower electrode section (204) comprises only a single pair of electrodes (210) whereas the upper electrode section (205) has two pairs of electrodes (210) like the example of Figure 1. For certain types of glass melts, it has been found that with this design of the widening shape it is easier to achieve the desired flow pattern and/or a homogenous start of the fining action in the fining tank over the whole width of the tank.

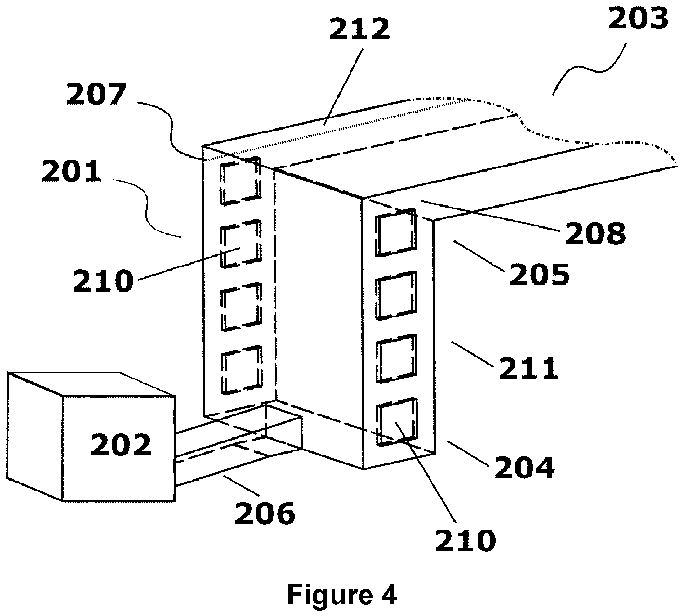

**Figure 4** shows yet another example of a riser duct (201) similar to the one of Figure 2 but having two additional middle electrode sections (211) instead of one. The electrodes (210) are in all sections plate-shaped, and the heating circuits in each of the lower electrode section (204), the two middle electrode sections (211), and the upper electrode section (205) are formed by a pair of single electrodes (210). Moreover, the riser duct (201) has a constant width over its height, i.e., the different sections of the riser duct (201) are correlated only with the placement of the electrodes (210) but not also with a dimensional difference of the riser duct (201). This design is easier to construct than the T-shaped counterparts and can be advantageous for certain types of glass melts since the larger volume may make it easier to create a uniform temperature over the whole width of the riser duct (201) at the outlet (208).

Reference numerals

| | |
|---|---|
| 201 | riser duct |
| 202 | glass melting vessel |
| 203 | fining vessel |
| 204 | lower electrode section |
| 205 | upper electrode section |
| 206 | flow duct |
| 207 | glass melt |
| 208 | outlet |
| 209 | heating circuit |
| 210 | electrode |
| 211 | middle electrode section |
| 212 | gaseous phase |

## Claims

1.  Riser duct (201) for connecting a glass melting vessel (202) to a fining vessel (203), the riser duct (201) comprising

    - a lower electrode section (204) and an upper electrode section (205),
    - a flow duct (206) connected to the lower electrode section (204) for feeding a glass melt (207) from the glass melting vessel (202) into the riser duct (201), and
    - an outlet (208) arranged in the upper electrode section (205) for feeding the glass melt (207) from the riser duct (201) into the fining vessel (203),
    wherein
    - the lower electrode section (204) and the upper electrode section (205) are each provided with one or more heating circuits (209) each comprising at least one pair of electrodes (210).

2.  Riser duct (201) according to claim 1, wherein a horizontal cross-section of the lower electrode section (204) has a smaller width than a horizontal cross-section of the upper electrode section (205).

3.  Riser duct (201) according to claim 1 or 2, wherein the outlet (208) has a width of 80 % - 110 % of an initial width of the fining vessel (203).

4.  Riser duct (201) according to at least one of the preceding claims, wherein between the lower electrode section (204) and the upper electrode section (205) one or more middle electrode sections (211) are arranged, wherein each of the one or more middle electrode sections (211) comprises one or more heating circuits (209) each comprising at least one pair of electrodes (210) and wherein a horizontal cross-section of each middle electrode section (211) has a larger width than that of the section directly upstream of said section and a smaller width than that of the section directly downstream of said section.

5. Riser duct (201) according to at least one of the preceding claims, wherein above the upper electrode section (205) a gaseous phase (212) is provided above a surface of the glass melt (207) in which optionally further heaters are installed and which optionally is in fluid communication with a gaseous phase (212) of the fining vessel (203).

6. Riser duct (201) according to at least one of the preceding claims, wherein the width of the horizontal cross-sections of the lower electrode section (204), middle electrode sections (211), and/or upper electrode section (205) changes continuously or discontinuously along a height of the riser duct (201) or is essentially constant.

7. Riser duct (201) according to at least one of the preceding claims, wherein the heating circuits (209) and any additional heaters provided in the gaseous phase (212) above the upper electrode section (205) are configured such that a power density $P_{total, upper}$ providable to the glass melt (207) comprising the sum of an electrical power density $P_{el, upper}$ providable by the heating circuits (209) of the upper electrode section (205) and a power density $P_{add}$ providable by the additional heaters is higher than an electrical power density $P_{el, lower}$ of the lower electrode section (204).

8. Riser duct (201) according to at least one of the preceding claims, wherein a width $w_f$ of the horizontal cross-section of the flow duct (206) and a width $w_l$ of the horizontal cross-section of the lower electrode section (204) are dimensioned $w_f \leq w_l$.

9. Riser duct (201) according to at least one of the preceding claims, wherein the electrodes (210) are

   - rod-shaped and/or tube-shaped and/or plate-shaped and/or block-shaped and/or dome-shaped, and/or
   - arranged in vertical or horizontal or oblique orientation in or on a wall or a horizontal surface of an electrode section, and/or
   - made of a material selected from Pt, Rh, Ir, Pd, alloys of these noble metals, Ta, Mo, $MoSi_2$, $MoZrO_2$, W, $SnO_2$, and combinations thereof.

10. Riser duct (201) according to at least one of the preceding claims, wherein the flow duct (206) is inclined towards the riser duct (201) and/or the outlet (208) is inclined towards the fining vessel (203).

11. Method for fining a glass melt (207) comprising

    - feeding a glass melt (207) from a melting vessel to a flow duct (206) of a riser duct (201), and
    - feeding the glass melt (207) from an outlet (208) into a fining vessel (203),
    wherein
    - the glass melt (207) is heated in the riser duct (201) such that an average temperature of the glass melt (207) on exit of the riser duct is < 50 °C or < 30 °C or < 10 °C below an average temperature of the glass melt (207) in the fining vessel (203); and
    - the riser duct (201) is a riser duct (201) according to at least one of claims 1 to 10.

12. Method according to claim 11, wherein the glass melt (207) is heated in the riser duct (201) in a lower electrode section (204) and an upper electrode section (205) by means of heating circuits (209) and optionally by additional heaters provided in a gaseous phase (212) above the upper electrode section (205) such that a power density $P_{total, upper}$ provided by the heating circuits (209) and any additional heaters comprising the sum of an electrical power density $P_{el, upper}$ provided by the heating circuits (209) of the upper electrode section (205) and a power density $P_{add}$ provided by the additional heaters is higher than an electrical power density $P_{el, lower}$ of the lower electrode section (204).

13. Method according to claim 11 or 12, wherein a mean volumetric pass-through time through the riser duct (201) is > 3 h or > 5 h or > 7 h or > 8 h.

14. Method according to at least one of claims 11 to 13, wherein an average temperature of the glass melt (207) on entry into the riser duct (201) is < 50 °C or < 100 °C or < 150 °C below the average temperature of the glass melt (207) in the fining vessel (203).

15. Method according to at least one of claims 11 to 14, wherein a shortest dwell time of the glass melt (207) in the riser duct (201) is > 2.0 h or > 3.0 h or > 4.0 h.

16. Method according to at least one of claims 11 to 15, wherein the heating in the riser duct (201) is effected such that at least in the upper 50 % of its height or at least in the upper 75 % of its height or at least in the upper 90 % of its height essentially a plug flow of the glass melt (207) is created.

**Patentansprüche**

1. Steigrohr (201) zum Verbinden eines Glasschmelzbehälters (202) mit einem Läuterbehälter (203), wobei das Steigrohr (201) aufweist:

- einen unteren Elektrodenabschnitt (204) und einen oberen Elektrodenabschnitt (205);
- einen mit dem unteren Elektrodenabschnitt (204) verbundenen Strömungskanal (206) zum Zuführen einer Glasschmelze (207) vom Glasschmelzbehälter (202) in das Steigrohr (201); und
- einen im oberen Elektrodenabschnitt (205) angeordneten Auslass (208) zum Zuführen der Glasschmelze (207) vom Steigrohr (201) in den Läuterbehälter (203),

wobei

- der untere Elektrodenabschnitt (204) und der obere Elektrodenabschnitt (205) jeweils einen oder mehrere Heizkreise (209) aufweisen, die jeweils mindestens ein Elektrodenpaar (210) aufweisen.

2. Steigrohr (201) nach Anspruch 1, wobei ein horizontaler Querschnitt des unteren Elektrodenabschnitts (204) eine geringere Breite hat als ein horizontaler Querschnitt des oberen Elektrodenabschnitts (205).

3. Steigrohr (201) nach Anspruch 1 oder 2, wobei der Auslass (208) eine Breite von 80 % bis 110 % einer Anfangsbreite des Läuterbehälters (203) aufweist.

4. Steigrohr (201) nach mindestens einem der vorhergehenden Ansprüche, wobei zwischen dem unteren Elektrodenabschnitt (204) und dem oberen Elektrodenabschnitt (205) ein oder mehrere mittlere Elektrodenabschnitte (211) angeordnet sind, wobei jeder unter dem einen oder den mehreren mittleren Elektrodenabschnitten (211) einen oder mehrere Heizkreise (209) mit jeweils mindestens einem Elektrodenpaar (210) aufweist, und wobei ein horizontaler Querschnitt jedes mittleren Elektrodenabschnitts (211) eine größere Breite als der direkt stromaufwärts davon liegende Abschnitt und eine kleinere Breite als der direkt stromabwärts davon liegende Abschnitt aufweist.

5. Steigrohr (201) nach mindestens einem der vorhergehenden Ansprüche, wobei oberhalb des oberen Elektrodenabschnitts (205) eine Gasphase (212) über einer Oberfläche der Glasschmelze (207) bereitgestellt wird, in der optional weitere Heizeinrichtungen installiert sind und die optional in Fluidkommunikation mit einer Gasphase (212) des Läuterbehälters (203) steht.

6. Steigrohr (201) nach mindestens einem der vorhergehenden Ansprüche, wobei die Breite der horizontalen Querschnitte des unteren Elektrodenabschnitts (204), der mittleren Elektrodenabschnitte (211) und/oder des oberen Elektrodenabschnitts (205) sich entlang einer Höhe des Steigrohrs (201) kontinuierlich oder diskontinuierlich ändert oder im Wesentlichen konstant ist.

7. Steigrohr (201) nach mindestens einem der vorhergehenden Ansprüche, wobei die Heizkreise (209) und etwaige zusätzliche Heizeinrichtungen, die in der Gasphase (212) oberhalb des oberen Elektrodenabschnitts (205) vorgesehen sind, derart konfiguriert sind, dass eine für die Glasschmelze (207) bereitstellbare Leistungsdichte $P_{total, upper}$, die die Summe einer durch die Heizkreise (209) des oberen Elektrodenabschnitts (205) bereitstellbaren elektrischen Leistungsdichte $P_{el, upper}$ und einer durch die zusätzlichen Heizeinrichtungen bereitstellbaren Leistungsdichte $P_{add}$ aufweist, höher ist als eine durch elektrische Leistungsdichte $P_{el, lower}$ des unteren Elektrodenabschnitts (204)

8. Steigrohr (201) nach mindestens einem der vorhergehenden Ansprüche, wobei eine Breite $w_f$ des horizontalen Querschnitts des Strömungskanals (206) und eine Breite $w_l$ des horizontalen Querschnitts des unteren Elektrodenabschnitts (204) derart bemessen sind, dass $w_f \leq w_l$ ist.

9. Steigrohr (201) nach mindestens einem der vorhergehenden Ansprüche, wobei die Elektroden (210)

stabförmig und/oder rohrförmig und/oder plattenförmig und/oder blockförmig und/oder kuppelförmig sind, und/oder
in einer vertikalen oder horizontalen oder schrägen Ausrichtung in oder an einer Wand oder einer horizontalen Fläche eines Elektrodenabschnitts angeordnet sind, und/oder
aus einem Material hergestellt sind, das ausgewählt ist aus Pt, Rh, Ir, Pd, Legierungen dieser Edelmetalle, Ta, Mo, $MoSi_2$, $MoZrO_2$, W, $SnO_2$ und Kombinationen davon.

10. Steigrohr (201) nach mindestens einem der vorhergehenden Ansprüche, wobei der Strömungskanal (206) zum Steigrohr (201) hin geneigt ist und/oder der Auslass (208) zum Läuterbehälter (203) hin geneigt ist.

11. Verfahren zum Läutern einer Glasschmelze (207), aufweisend:

- Zuführen einer Glasschmelze (207) von einem Schmelzbehälter in einen Strömungskanal (206) eines Steigrohrs (201); und
- Zuführen der Glasschmelze (207) von einem Auslass (208) in einen Läuterbehälter (203), wobei
- die Glasschmelze (207) im Steigrohr (201) derart erwärmt wird, dass eine Durchschnittstemperatur der Glasschmelze (207) beim Austritt aus dem Steigrohr < 50 °C oder < 30 °C oder < 10 °C unter einer Durchschnittstemperatur der Glasschmelze (207) im Läuterbehälter (203) liegt; und

- das Steigrohr (201) ein Steigrohr (201) nach mindestens einem der Ansprüche 1 bis 10 ist.

12. Verfahren nach Anspruch 11, wobei die Glasschmelze (207) im Steigrohr (201) in einem unteren Elektrodenabschnitt (204) und einem oberen Elektrodenabschnitt (205) mittels Heizkreisen (209) und gegebenenfalls durch zusätzliche Heizeinrichtungen, die in einer Gasphase (212) oberhalb des oberen Elektrodenabschnitts (205) vorgesehen sind, derart erwärmt wird, dass eine durch die Heizkreise (209) und etwaige zusätzliche Heizeinrichtungen bereitgestellte Leistungsdichte $P_{total, upper}$, die die Summe aus einer durch die Heizkreise (209) des oberen Elektrodenabschnitts (205) bereitgestellten elektrischen Leistungsdichte $P_{el, upper}$ und einer durch die zusätzlichen Heizeinrichtungen bereitgestellten Leistungsdichte $P_{add}$ aufweist, höher ist als eine elektrische Leistungsdichte $P_{el, lower}$ des unteren Elektrodenabschnitts (204)

13. Verfahren nach Anspruch 11 oder 12, wobei eine mittlere volumetrische Durchlaufzeit durch das Steigrohr (201) > 3 h oder > 5 h oder > 7 h oder > 8 h beträgt.

14. Verfahren nach mindestens einem der Ansprüche 11 bis 13, wobei eine durchschnittliche Temperatur der Glasschmelze (207) beim Eintritt in das Steigrohr (201) < 50 °C oder < 100 °C oder < 150 °C unter der durchschnittlichen Temperatur der Glasschmelze (207) im Läuterbehälter (203) liegt.

15. Verfahren nach mindestens einem der Ansprüche 11 bis 14, wobei eine kürzeste Verweilzeit der Glasschmelze (207) im Steigrohr (201) > 2,0 h oder > 3,0 h oder > 4,0 h beträgt.

16. Verfahren nach mindestens einem der Ansprüche 11 bis 15, wobei die Erwärmung im Steigrohr (201) derart erfolgt, dass zumindest in den oberen 50 % seiner Höhe oder zumindest in den oberen 75 % seiner Höhe oder zumindest in den oberen 90 % seiner Höhe im Wesentlichen eine Pfropfenströmung der Glasschmelze (207) erzeugt wird.

**Revendications**

1. Conduit ascendant (201) pour relier un récipient de fusion du verre (202) à une cuve d'affinage (203), le conduit ascendant (201) comprenant

- une section d'électrode inférieure (204) et une section d'électrode supérieure (205),

- un conduit d'écoulement (206) connecté à la section d'électrode inférieure (204) pour alimenter un verre fondu (207) dans le conduit ascendant (201) à partir du récipient de fusion du verre (202), et

- une sortie (208) disposée dans la section d'électrode supérieure (205) pour alimenter le verre fondu (207) dans la cuve d'affinage (203) à partir du conduit ascendant (201),

dans lequel

- la section d'électrode inférieure (204) et la section d'électrode supérieure (205) sont chacune pourvues d'un ou plusieurs circuits de chauffage (209) comprenant chacun au moins une paire d'électrodes (210).

2. Conduit ascendant (201) selon la revendication 1, dans lequel une coupe horizontale de la section d'électrode inférieure (204) a une largeur inférieure à une coupe horizontale de la section d'électrode supérieure (205).

3. Conduit ascendant (201) selon la revendication 1 ou 2, dans lequel la sortie (208) a une largeur de 80 % - 110 % d'une largeur initiale de la cuve d'affinage (203).

4. Conduit ascendant (201) selon au moins l'une des revendications précédentes, dans lequel entre la section d'électrode inférieure (204) et la section d'électrode supérieure (205) sont disposées une ou plusieurs sections d'électrode intermédiaire (211), dans lequel chacune de l'une ou plusieurs sections d'électrode intermédiaire (211) comprend un ou plusieurs circuits de chauffage (209) comprenant chacun au moins une paire d'électrodes (210) et dans lequel une coupe horizontale de chaque section d'électrode intermédiaire (211) a une largeur plus grande que celle de la section directement en amont de ladite section et une largeur plus petite que celle de la section directement en aval de ladite section.

5. Conduit ascendant (201) selon au moins l'une des revendications précédentes, dans lequel au-dessus de la section d'électrode supérieure (205), une phase gazeuse (212) est prévue au-dessus d'une surface du verre fondu (207) dans laquelle sont éventuellement installés d'autres dispositifs de chauffage et qui est éventuellement en communication fluidique avec une phase gazeuse (212) de la cuve d'affinage (203).

6. Conduit ascendant (201) selon au moins l'une des revendications précédentes, dans lequel la largeur des coupes horizontales de la section d'électrode inférieure (204), des sections d'électrode intermédiaire (211), et/ou de la section d'électrode supérieure (205) change de manière continue ou discontinue le long d'une hauteur du conduit ascendant (201) ou est essentiellement constante.

7. Conduit ascendant (201) selon au moins l'une des revendications précédentes, dans lequel les circuits de chauffage (209) et les éventuels dispositifs de chauffage supplémentaires prévus dans la phase gazeuse (212) au-dessus de la section d'électrode supérieure (205) sont configurés de telle sorte qu'une densité de puissance $P_{total, supérieure}$ est apte à être fournie au verre fondu (207) comprenant la somme d'une densité d'une puissance électrique $P_{el,supérieure}$ apte à être fournie par les circuits de chauffage (209) de la section d'électrode supérieure (205) et d'une densité de puissance $P_{add}$ apte à être fournie par les dispositifs de chauffage supplémentaires est supérieure à une densité de puissance électrique $P_{el, inférieure}$ de la section d'électrode inférieure (204).

8. Conduit ascendant (201) selon au moins l'une des revendications précédentes, dans lequel une largeur $w_f$ de la coupe horizontale du conduit d'écoulement (206) et une largeur $w_l$ de la coupe horizontale de la section d'électrode inférieure (204) sont dimensionnées $w_f \leq w_l$.

9. Conduit ascendant (201) selon au moins l'une des revendications précédentes, dans lequel les électrodes (210) sont

- en forme de tige et/ou en forme de tube et/ou en forme de plaque et/ou en forme de bloc et/ou en forme de dôme, et/ou
- disposées selon une orientation verticale, horizontale ou oblique dans ou sur une paroi ou une surface horizontale d'une section d'électrode, et/ou
- réalisées dans un matériau choisi parmi Pt, Rh, Ir, Pd, les alliages de ces métaux nobles, Ta, Mo, $MoSi_2$, le $MoZrO_2$, W, $SnO_2$ et leurs combinaisons.

10. Conduit ascendant (201) selon au moins l'une des revendications précédentes, dans lequel le conduit d'écoulement (206) est incliné vers le conduit ascendant (201) et/ou la sortie (208) est inclinée vers la cuve d'affinage (203).

11. Méthode d'affinage d'un verre fondu (207) comprenant

- l'alimentation d'un verre fondu (207) à partir d'un récipient de fusion vers un conduit d'écoulement (206) d'un conduit ascendant (201), et
- l'alimentation du verre fondu (207) à partir d'une sortie (208) dans une cuve d'affinage (203),
dans laquelle
- le verre fondu (207) est chauffé dans le conduit ascendant (201) de sorte qu'une température moyenne du verre fondu (207) en sortie du conduit ascendant est < 50 °C ou < 30 °C ou < 10 °C en dessous d'une témpérature moyenne du verre fondu (207) dans la cuve d'affinage (203) ; et
- le conduit ascendant (201) est un conduit ascendant (201) selon au moins l'une des revendications 1 à 10.

12. Procédé selon la revendication 11, dans lequel le verre fondu (207) est chauffé dans le conduit ascendant (201) dans une section d'électrode inférieure (204) et une section d'électrode supérieure (205) au moyen de circuits de chauffage (209) et éventuellement par des dispositifs de chauffage supplémentaires fournis dans une phase gazeuse (212) audessus de la section d'électrode supérieure (205) de sorte qu'une densité de puissance $P_{total, supérieure}$ fournie par les circuits de chauffage (209) et d'éventuels dispositifs de chauffage supplémentaires comprenant la somme d'une densité de puissance électrique $P_{el, supérieure}$ fournie par les circuits de chauffage (209) de la section d'électrode supérieure (205) et d'une densité de puissance $P_{add}$ fournie par les dispositifs de chauffage supplémentaires soit supérieure à une densité de puissance électrique $P_{el, inférieure}$ de la section d'électrode inférieure (204).

13. Méthode selon la revendication 11 ou 12, dans laquelle un temps de passage volumétrique moyen à travers le conduit ascendant (201) est > 3 h ou > 5 h ou > 7 h ou > 8 h.

14. Méthode selon l'une au moins des revendications 11 à 13, dans laquelle une température moyenne du verre fondu (207) à l'entrée du conduit ascendant (201) est < 50 °C ou < 100 °C ou < 150 °C en dessous de la température moyenne du verre fondu (207) dans la cuve d'affinage (203).

15. Méthode selon l'une au moins des revendications 11 à 14, dans laquelle le temps de séjour le plus court du verre fondu (207) dans le conduit ascendant (201) est > 2,0 h ou > 3,0 h ou > 4,0 h.

16. Procédé selon l'une au moins des revendications 11 à 15, dans lequel le chauffage dans le conduit ascendant (201) est effectué de telle sorte qu'au moins dans les 50 % supérieurs de sa hauteur ou au moins dans les 75 % supérieurs de sa hauteur ou au moins dans les 90 % supérieurs de sa hauteur, il se crée essentiellement un écoulement en bouchon du verre fondu (207).

**Figure 1**

**Figure 2**

**212**

**203**

**207**

**201**

**210**

**208**

**205**

**202**

**204**

**206**

**210**

Figure 3

Figure 4

**EP 4 530 264 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014116549 A1